# EUROPEAN PATENT SPECIFICATION

(11) **EP 0 918 637 B1**
(45) Date of publication and mention of the grant of the patent: **24.11.2004**
(21) Application number: 98908984.2
(22) Date of filing: 06.03.1998
(51) Int. Cl.: B32B 31/18

(54) **IMPROVED ULTRASONIC TYING TOOL**
VERBESSERTES MIT ULTRASCHALL ARBEITENDES BINDEWERKZEUG
OUTIL DE FICELAGE ULTRASONORE AMELIORE

(30) Priority: 07.03.1997 US 40486 P
(43) Date of publication of application: 02.06.1999
(73) Proprietor: Thomas & Betts International, Inc., Sparks, Nevada 89434 (US)
(72) Inventor: STUDENTS, John, J., Collierville, TN 38017 (US); BATHOLOMEW, Paul, J., Memphis, TN 38111 (US); LOWERY, Gary, L., Southaven, MS 38671 (US); KHOKHAR, Wasim, Cordova, TN 38018 (US); BAILEY, Mark, A., Senatobia, MS 38668 (US); DORIAN, John, D., Olive Branch, MS 38654 (US); SEHLMEYER, John, A., Mount Sinai, NY 11766 (US)
(74) Representative: Howick, Nicholas Keith
(86) International application number: PCT/US1998/004358
(87) International publication number: WO 1998/039159

(56) References cited:
- US-A- 4 265 687
- US-A- 4 534 817
- US-A- 5 062 920
- US-A- 5 509 994

## Description

This application claims priority to U.S. Provisional Application No. 60/040,486 filed March 7, 1997.

### BACKGROUND OF THE INVENTION

The present invention relates to a tool for applying a weldable tape about a bundle of elongate articles and, more particularly, to an improved tool and method for securing the tape about the articles without loss of tension in the tape and without leaving an unsecured loose end or a protruding sharp edge adjacent the weld.

Various techniques exist for bundling elongate articles such as wires, cables or the like. One preferred technique for bundling a plurality of elongate articles involves the feeding of a weldable tape about the bundled articles until the tape overlaps itself, tensioning the tape about the bundle of articles and thereafter welding the tape at the location of the overlap to provide a tensioned loop which secures the bundle of articles. The tensioned loop is then cut free from the remaining stock of tape so that the tool can be removed from the first bundle of articles and moved to a second location to secure a second portion of tape about a second bundle of articles.

The prior art tools accomplish the welding and cutting operations in various ways, all of which have disadvantages. Certain prior art tools are disclosed in U.S. Patent Nos. 4,265,687, 4,534, 817, 5,062,920 and 5,509,994. The latter providing the basis for the two-part form of claim 1. A first group of prior art tools are configured to both weld and cut the tape at the same location. This technique often results in loosening of the tape about the bundle of articles (i.e., loss of tension) because the cutting portion of the bundling operation may adversely effect and/or weaken the ultrasonic weld which has been previously applied to the tape. Weakening of the weld thus allows the tape to stretch and lose its tension about the bundle of articles. A second group of prior art tools locate the cutting element a distance from the weld location so as not to weaken the weld. These tools, however, leave a loose end of tape adjacent the weld following the cutting operation which is undesirable (and many times unacceptable) in various installations. Certain other prior art tools rely on a technique whereby a portion of the tape is weakened during the welding operation such that the application of tension to the tape following the welding operation severs the tensioned loop tape from the stock of tape. However, the repeatability of such a technique is often inconsistent and, the technique often leaves a ragged loose end adjacent the weld.

There is therefore a need in the art for a tying tool which can readily bundle a plurality of elongate articles by applying a weldable tape thereabout, tensioning such tape, welding the tensioned loop at the location of the overlap and thereafter severing the welded tensioned loop from the stock of tape without weakening the weld (which allows loss of tension in the bundle of articles) or leaving an unsecured loose end or a protruding sharp edge adjacent the weld which is undesirable and/or unacceptable in various installations.

### SUMMARY OF THE INVENTION

The present invention, which addresses the needs of the prior art, relates to an ultrasonic tying tool for applying a weldable tape about a bundle of elongate articles. The tool includes a housing having a body and a handle. The tool further includes a jaw assembly cooperating with the body and configured to grasp the elongate articles whereby the tape may be looped about the articles. The tool further includes an ultrasonic horn supported within the body and including a welding tip located proximate the jaw assembly. The tool additionally includes at least one anvil located to cooperate with the welding tip and adapted for manipulating a portion of the weldable tape bearing thereagainst. Finally, the welding tip is displaceable between a first location wherein the welding tip is positioned to weld the tape thus securing the tape about the elongate articles and a second location wherein the welding tip is displaced a distance from the first location and positioned to effect cutting of the tape and tack welding of the resultant cut end to the underlying tape of the loop.

The present invention further relates to a method for bundling a plurality of elongate articles. The method includes the step of wrapping a weldable tape having a first free end about the articles to form a loop of tape extending around the articles and beyond the first free end thereby providing an overlap of tape. The method includes the further step of welding the overlapped tape at a first location along the overlap. The method includes the additional step of cutting the tape at a second location along the overlap to provide a second distal end. Finally, the method includes the step of welding the second distal end to the underlying tape of the loop.

In one preferred embodiment, the method of bundling the plurality of elongate articles may be accomplished by providing an ultrasonic welding tip for ultrasonically welding the overlapped tape at the first location along the overlap and thereafter displacing the welding tip to a second location along the overlap to effect the cutting of the tensioned loop from the stock of tape and welding of the cut end to the underlying tape of the loop.

As a result, the present invention provides an ultrasonic tying tool which can readily bundle a plurality of elongate articles by applying a weldable tape thereabout, tensioning such tape, welding the tensioned loop at the location of the overlap and thereafter severing the welded tensioned loop from the stock of tape without weakening the weld (which allows loss of tension in the bundle of articles) or leaving an unsecured loose end or a protruding sharp edge adjacent the weld.

### BRIEF DESCRIPTION OF THE DRAWINGS

Figure 1 is a perspective view of the tool of the present invention;
Figure 2 is an elevational view of the tool of Figure 1 with a portion of the housing removed;
Figure 3 is a view similar to Figure 2 showing a tape-supplying cartridge secured to a rearward portion of the tool;
Figure 4 is an enlarged detail of the tape-supplying cartridge of Figure 3;
Figure 4a is an exploded perspective view of the tape-supplying cartridge;
Figure 4b is an elevational view of the tape-supplying mechanism of the present tool;
Figure 5 is a perspective view of a tool subassembly removed from the housing;
Figure 5a is an enlarged detail of the horn assembly of Figure 5;
Figure 6 is a perspective view of the subassembly including the anvils and clamping block;
Figure 7 is a perspective view showing the ultrasonic horn subassembly;
Figure 8 is an elevational view of the ultrasonic hom with the welding tip in its untilted, welding position;
Figure 9 is an elevational view of the ultrasonic horn with the welding tip in its tilted, cutting/tack welding position;
Figure 10 is an enlarged detail of the welding/cutting operation;
Figure 11 is an enlarged detail showing the welded tensioned loop cut free from the stock of tape;
Figure 12 is an enlarged detail of the welded distal end of the tape;
Figure 13 is a plan view showing the anvils in a home position;
Figure 14 is a plan view showing the anvils in a guide position;
Figure 15 is a plan view showing the anvils in a clamp position;
Figure 16 is a plan view showing the anvils in a weld position;
Figure 17 is a plan view showing an alternative embodiment of the anvil arm; and
Figure 18 is an alternative embodiment of the jaw assembly.

### DETAILED DESCRIPTION OF THE INVENTION

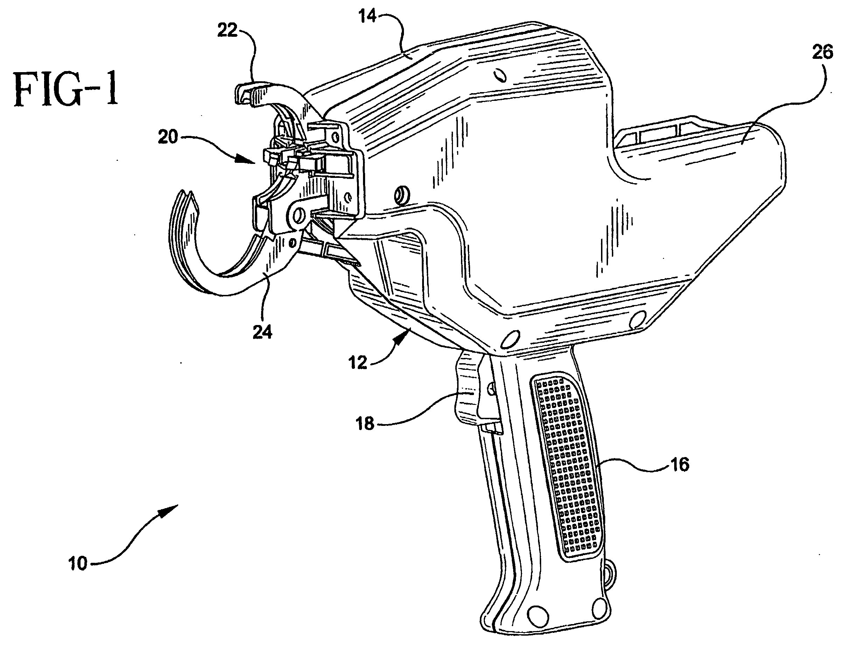

Referring now to the drawings, Figure 1 shows an ultrasonic tying tool 10 in accordance with the present invention. Tool 10 includes a generally pistol-shaped housing 12, the housing including a body 14 and a handle 16. A trigger 18, for operating the tool, is provided on handle 16. A jaw assembly 20 is provided on a forward end of tool 10. Jaw assembly 20 includes an upper stationary jaw 22 and a lower movable jaw 24. The rear portion of body 14 includes a cartridge mounting interface 26 and a drive/guide wheel 28 rotatably mounted to housing 12.

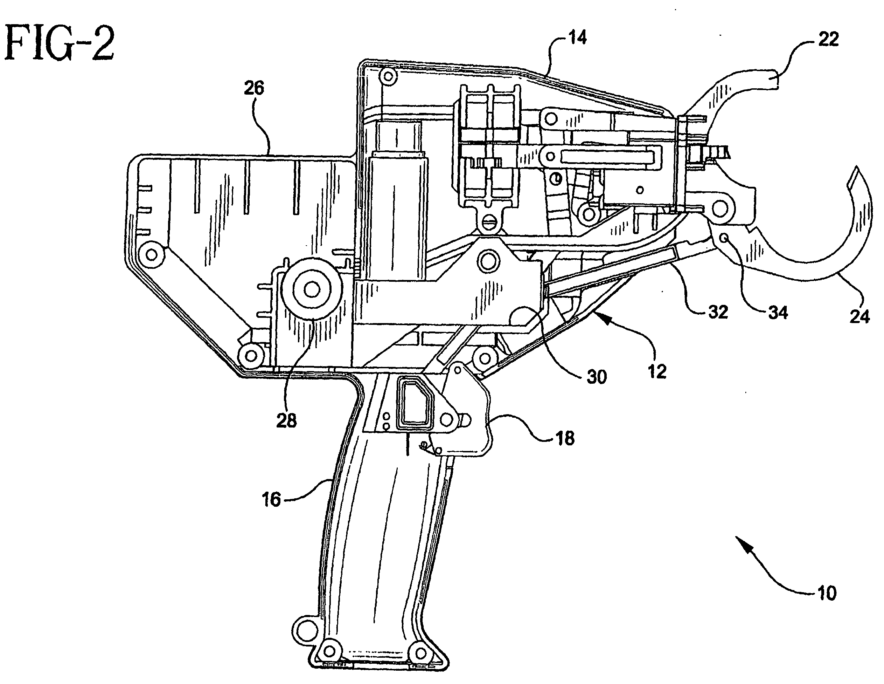

As best seen in Figure 2, tool 10 includes a mounting platform 30 for supporting a number of tool components (as discussed further hereinbelow). Mounting platform 30, in turn, cooperates with housing 12 to allow assembly of the tool components therein. In this regard, housing 12 is preferably formed with a platform-receiving structure which receives and secures platform 30 within such housing.

Tool 10 further includes a jaw-actuating rod assembly 32 for moving lower movable jaw 24 between an open position to allow insertion of a bundle of elongate articles therein and a closed position for securement of a weldable tape thereabout. A first end of rod assembly 32 is pivotably connected to jaw 24 via pin 34, while the other end of the rod assembly (not shown) communicates with a link (not shown), which in turn communicates with trigger 18. Thus, squeezing of trigger 18 closes jaw 24, while release of trigger 18 opens jaw 24.

Squeezing of trigger 18 also operates a switch (not shown) electrically communicating with a control mechanism (not shown). As will be recognized by those skilled in the art, the control mechanism may, for example, include a programmed microchip contained internally within the tool or external to the tool (e.g., the microchip and power supply could be combined together into one unit). The control mechanism provides power and/or instructions to the components of the tool at the appropriate points during the bundling operation.

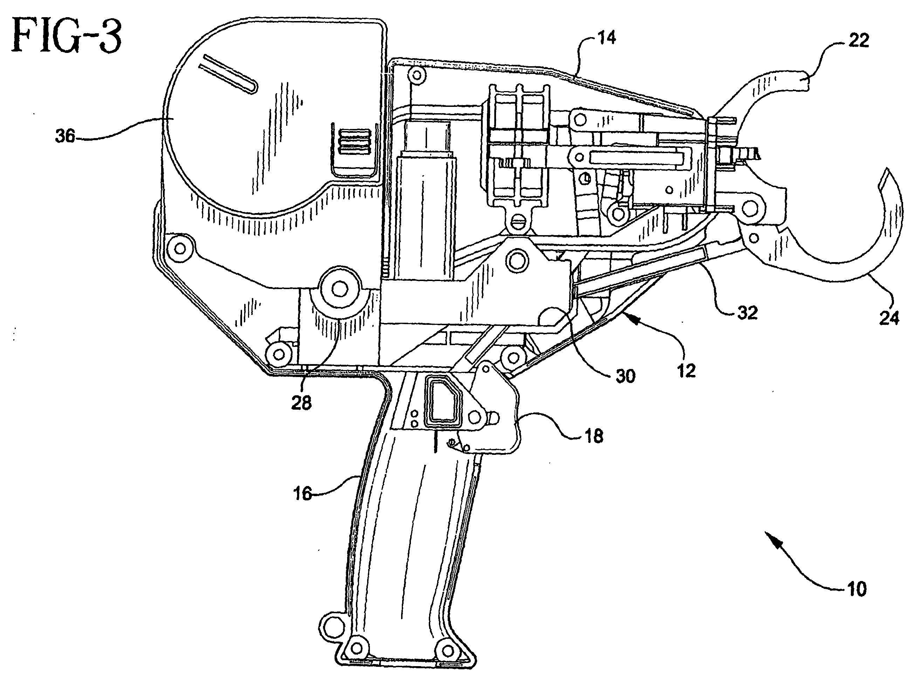

Referring now to Figure 3, tool 10 is configured to receive and cooperate with a tape-supplying cartridge 36. In one preferred embodiment, cartridge 36 is sized and configured to cooperate with and mount to cartridge-mounting interface 26 of housing 12. As will be discussed in more detail hereinbelow, cartridge 36 contains a fixed length of tape wound on a spool. The preferred cartridge has various features which ensure reliable feeding of the tape from the spool to the ultrasonic tieing tool. The cartridge is preferably designed as a disposable item such that the cartridge is discarded once all the tape contained therein has been used. In this regard, the cartridge is preferably formed of a two-piece molded plastic housing, the halves of the housing being bonded together in a press-fit assembly. Air vents may be provided in the molded portions of the cartridge housing to allow air to escape during the press-fit operation. As the cartridge is designed to be disposable, once the cartridge housing has been assembled, re-opening of the same destroys such housing. The disposable design of cartridge 36 thus ensures that quality control with respect to the tape supply can be maintained.

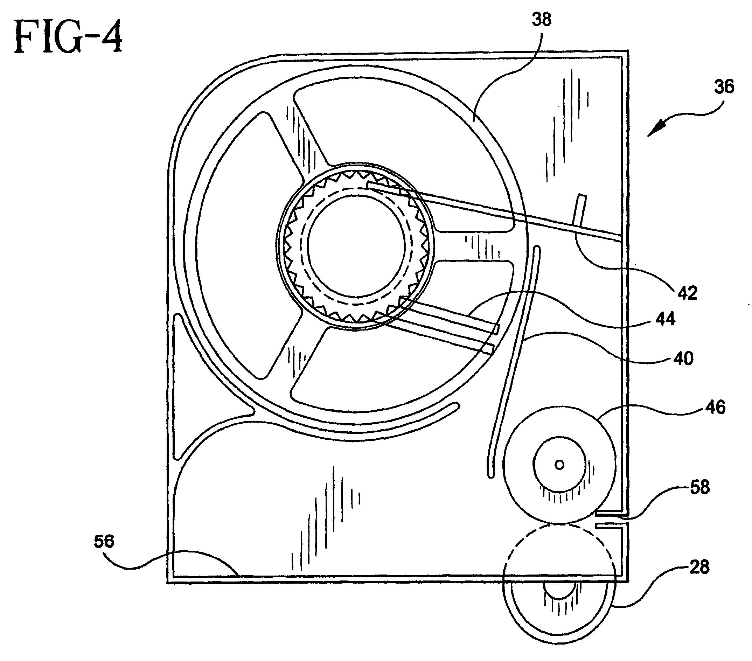

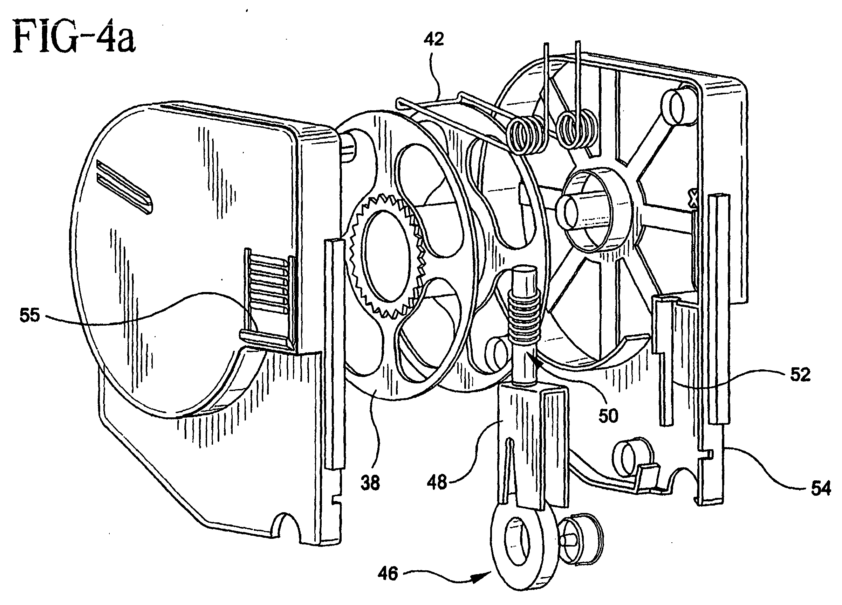

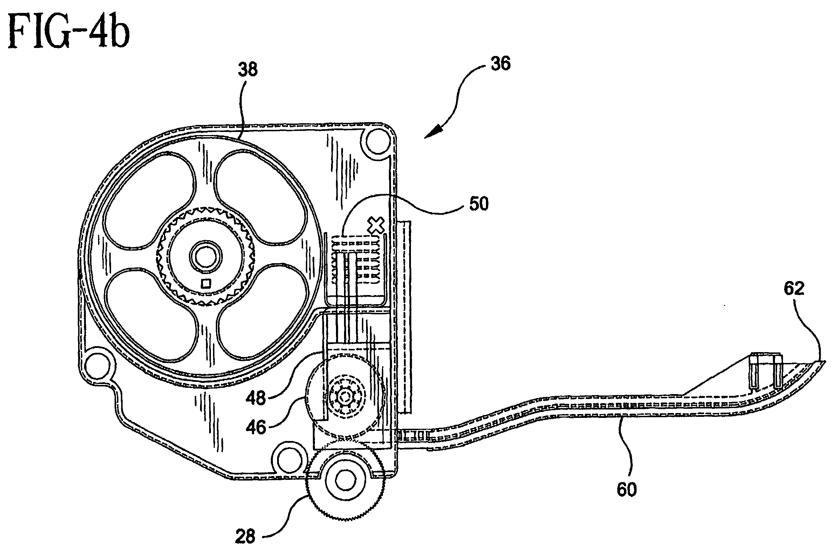

As best shown in Figure 4, cartridge 36 includes a spool 38 for winding of a weldable tape 40 thereabout. Tape 40 may be formed from any suitable weldable material, e.g., polyester. A spring 42 ensures that the tape remains coiled tightly about the spool. A ratchet mechanism 44 limits rotation of the spool to a single direction, thus preventing loosening and/or unwinding of the tape from the spool. The cartridge 36 further includes a pinch/guide wheel 46 rotatably mounted thereto and positioned to contact and cooperate with drive/guide wheel 28 mounted on housing 12. The interaction of the pinch-guide wheels is preferably accomplished by spring loading at least one of the wheels.

For example, pinch/guide wheel 46 may be spring loaded within cartridge 36 such that securement of cartridge 36 to housing 12 of the tool forces wheel 46 into engagement with wheel 28. As shown in Figure 4a, a wheel guide 48 and a spring assembly 50 may be utilized to accomplish the spring loading of pinch/guide wheel 46. As shown, wheel guide 48 is sized to cooperate with a track 52 formed in housing 54 of cartridge 36. Housing 54 preferably includes a guide strip 53 for positioning the cartridge with respect to the tool and a snap-lock connector 55 for securing the cartridge to the tool. Assembly of the mentioned components is shown in Figure 4b.

Cartridge 36 preferably includes a slack take-up region 56 for receipt of excess tape during the tensioning process. During this stage of the bundling operation, the direction of rotation of drive/guide wheel 28 is reversed (from clockwise rotation to counter-clockwise rotation) to tension the tape looped about the bundle of articles in the jaw assembly of the tool. The excess tape is thus pulled into housing 54 and received within slack take-up region 56.

Cartridge 36 further includes an exit chute 58 for exit of tape 40 from the cartridge and into the tool. This exit chute may be configured with a trap door which closes following complete dispensing of the tape from the cartridge. Of course, it is contemplated herein that other cartridges assemblies suitable for supplying a supply of weldable tape to the gun may be utilized with the tool of the present invention. It is further contemplated that the supply of weldable tape could be located on a spool separate from the tool itself.

Referring now to Figure 4b, tool 10 preferably includes a tape track 60 for guiding the tape exiting from the cartridge through the tool. In this regard, track 60 includes a track exit 62 which cooperates with a second tape track 63 to be discussed further hereinbelow. Tape track 60 is preferably one continuous track which provides one continuous passage from chute 58 to track exit 62. The tape passage, which is located within the tape track, is preferably dimensioned as to provide a passageway with little clearance between the tape and track. This ensures that the tape does not buckle as it is fed forward through the track.

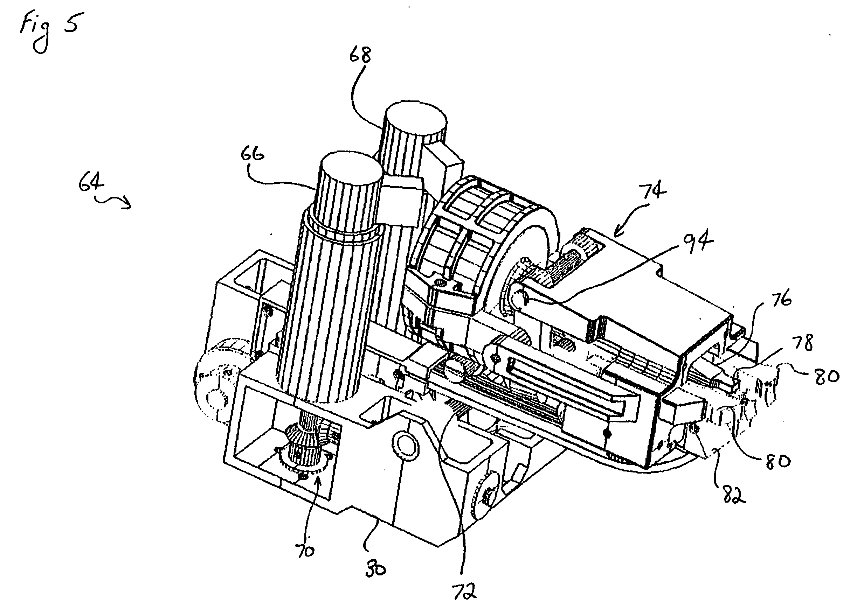

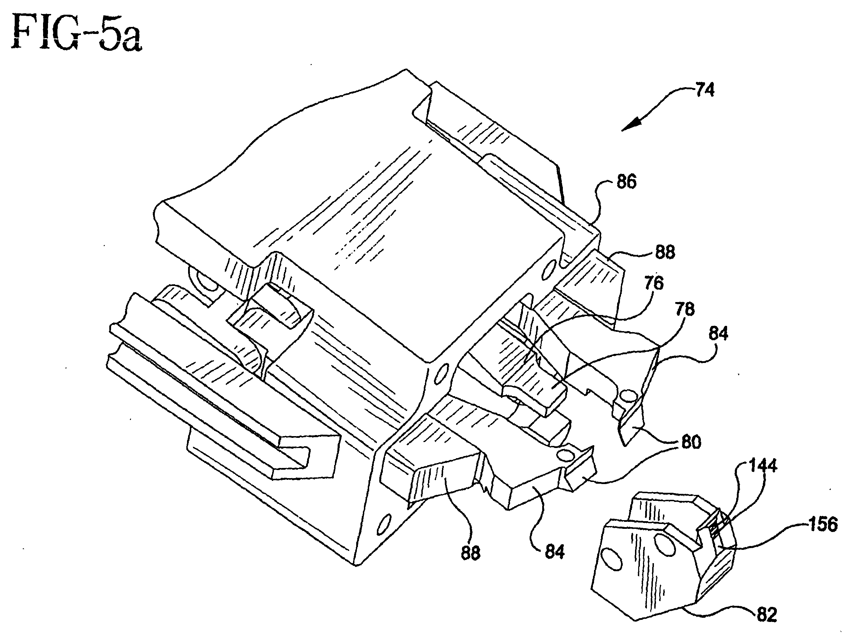

Referring now to Figure 5, a tool sub assembly 64 is shown removed from housing 12. The subassembly 64 includes mounting platform 30 which supports a first motor 66 and a second motor 68. The first motor 66 cooperates with a gear assembly 70 for driving a crank shaft 72. The second motor 68 cooperates with a tape drive mechanism (not shown). The tape drive mechanism includes drive/guide wheel 28 and is designed to withdraw tape from cartridge 36 during the binding operation, and to tension the tape by withdrawing tape into slack take-up region 56 during the tensioning operation.

Subassembly 64 further includes horn assembly 74. In turn, horn assembly 74 includes ultrasonic horn 76 having an ultrasonic welding tip 78. Horn assembly 74 further includes a pair of movable anvils 80. Ultrasonic horn assembly 74 additionally includes a clamping block 82. The foregoing mentioned elements are shown in greater detail in Figure 5a. Clamping block 84 has been exploded away from horn assembly 74 for purposes of clarity.

Anvils 80 are formed on the distal portion of a pair of opposing arms 84. Housing 86 of horn assembly 74 is configured to allow reciprocal motion of arms 84 therein. In this regard, housing 86 includes a pair of opposing guide blocks 88 which urge anvils 80 towards one another as the arms are withdrawn into housing 86. As will be discussed in further detail hereinbelow, arms 84 are formed with flexible hinge portions which tends to urge arms 84 outward once the distal portion of the arms have been extended beyond guide blocks 88.

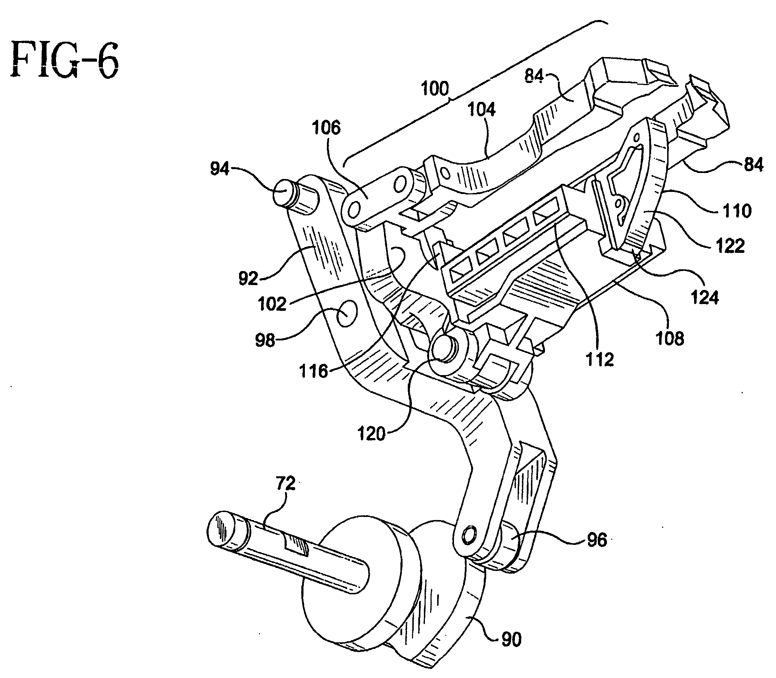

Referring now to Figure 6, crank shaft 72 includes a cam 90 having a plurality of eccentric surfaces thereon. Horn assembly 74 includes a lever 92 which pivotally mounts to housing 86 about pin 94. Lever 92 includes a guide wheel 96 which follows the eccentric surfaces located on cam 90. A spring (not shown) is utilized to urge lever 92 clockwise about pin 94 such that guide wheel 96 follows and remains in contact with cam 90. Lever 92 further includes a roller 98 which contacts and imparts translational movement to anvil subassembly 100.

In turn, anvil subassembly 100 includes arm 102 which contacts and thus cooperates with roller 98. However, anvil subassembly 100 is not directly connected to lever 92. Rather, contact between lever 92 and anvil subassembly 100 is limited to the physical contact of roller 98 and a rearward surface of arm 102.

As shown, anvil arms 84 include a flexible hinge portions 104 which allow flexing of the distal end of the arm during translational movement within housing 86. Anvil arms 84 are connected to arm 102 via a coupling 106.

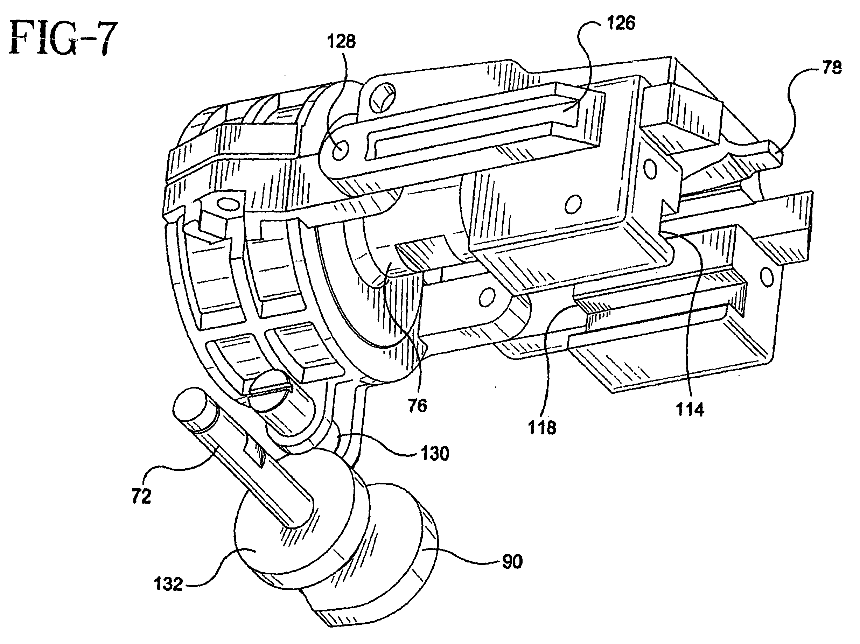

Anvil subassembly 100 further includes a block assembly 108 having a mounting bracket 110 located on a distal end thereof. Block assembly 108 includes an extending tongue 112 which cooperates and slides within a groove 114 formed in housing 86 (see Figure 7). Block assembly 108 includes a stop flange 116 configured to cooperate and contact rearward surface 118 of groove 114, thereby preventing any further forward translational movement of block assembly 108 within housing 86. Block assembly 108 is connected to arm 102 via pin assembly 120.

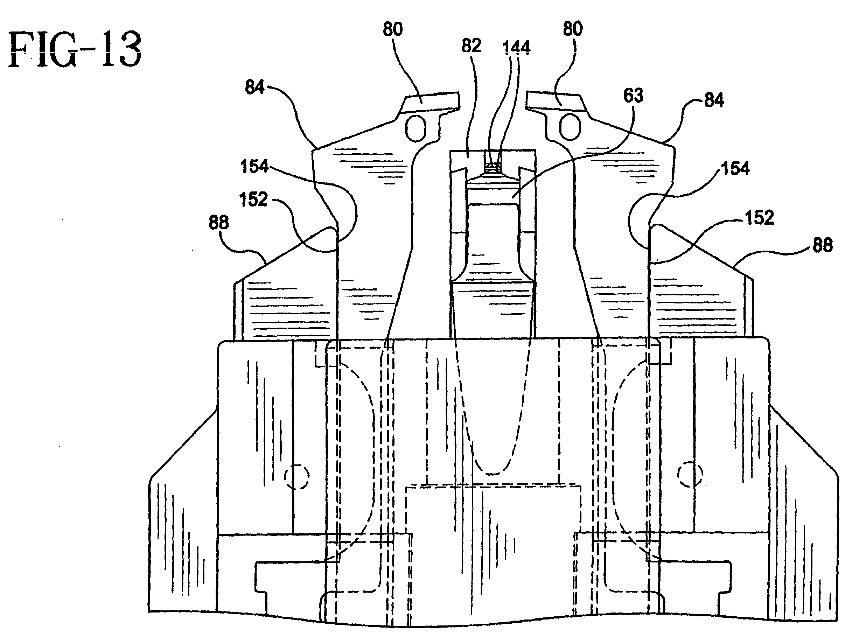

Clamping block 82 is configured to surround mounting bracket 110 and be fixed thereto. When clamping block 82 is mounted to mounting bracket 110, the forward most portion of the tape track (i.e., second tape track 63 shown in Figures 13-14) is formed therebetween. Particularly, surface 122 of mounting bracket 110 forms one wall of the tape track 63, while an interior surface of the clamping block 82 forms the opposing wall of tape track 63. Track exit 62 of tape track 60 cooperates with an entry region 124 of mounting bracket 110. Although the translational movement of block assembly 108 with respect to housing 86 is relatively small, the interface between track exit 62 of tape track 60 and entry region 124 defined by the bracket/clamping block arrangement must provide sufficient tolerance to allow this movement. In one preferred embodiment, entry region 124 is formed with a funnel shape to facilitate the feeding of the tape into second tape track 63. Accordingly, as guide wheel 96 follows cam 90, translational movement of anvil arms 84 and block assembly 108 is accomplished.

As will be discussed further hereinbelow, the tool of the present invention overcomes certain disadvantages associated with prior art tools in that the present tool is capable of securing a tape about a bundle of elongate articles and thereafter welding and cutting the tape without loss of tension in the bundled articles and without leaving a loose cut end of tape adjacent the weld, such loose end forming a sharp edge or burr. In one preferred embodiment, the ultrasonic horn of the tool includes a tilting mechanism which allows the ultrasonic horn to be positioned in a first location for welding the overlapped tensioned tape to itself to secure the looped tape about the elongate articles and a second location which allows the horn to be displaced a distance from the weld for simultaneous ultrasonic cut-off and tack-down of the loose end of the tape. Thus, ultrasonic energy is applied at two successive instances: first to weld the overlapped tape to secure the tensioned loop about the elongate articles, and second to cut the tensioned loop free from the stock of tape and tack weld the cut-off loose end to the underlying tape, thus eliminating any unsecured loose ends or protruding sharp edges. It is contemplated herein that other two step welding operations may be suitable for securing a weldable tape about a bundle of elongate articles. For example, the ultrasonic horn may undergo movement other than rotation to produce the displacement of the welding tip or more than one welding tip could be utilized.

The tilting mechanism of the present tool is explained with reference to Figure 7. Horn assembly 74 includes a pair of opposing grooves 126 which cooperate with a pair of opposing tongues (not shown) formed on the interior of housing 12, thereby locating and fixing horn assembly 74 within housing 12. When located within housing 12, housing 86 of horn assembly 74 is fixed with respect to housing 12. The ultrasonic welding horn 76 is pivotally mounted to housing 86 via pivot pin 128. Horn 76 includes a rotatably mounted guide wheel 130 located at the end opposite welding tip 78. Guide wheel 130 follows an eccentric cam 132. Cam 132 includes a single eccentric surface which pivots horn 76 about pin 128 between a welding position and a cutting/tack welding position.

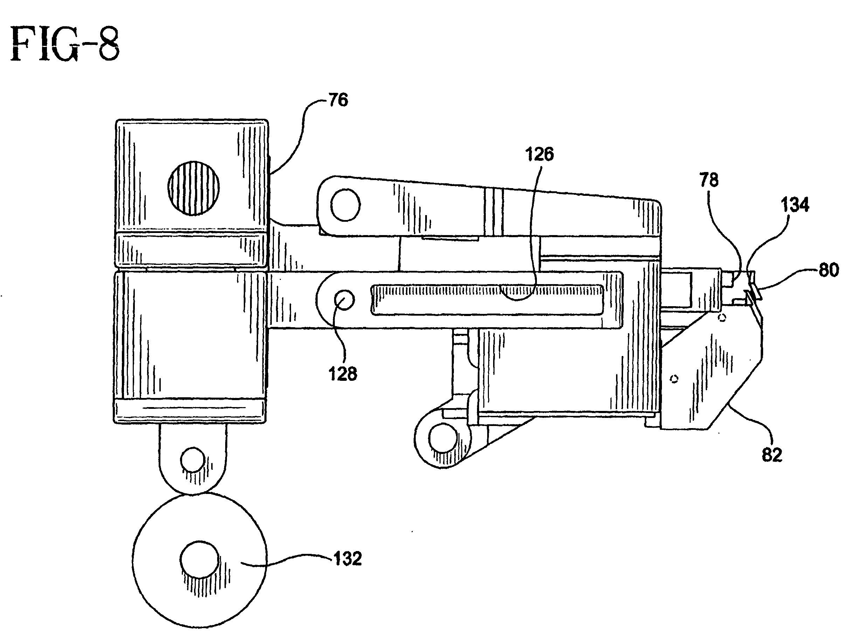

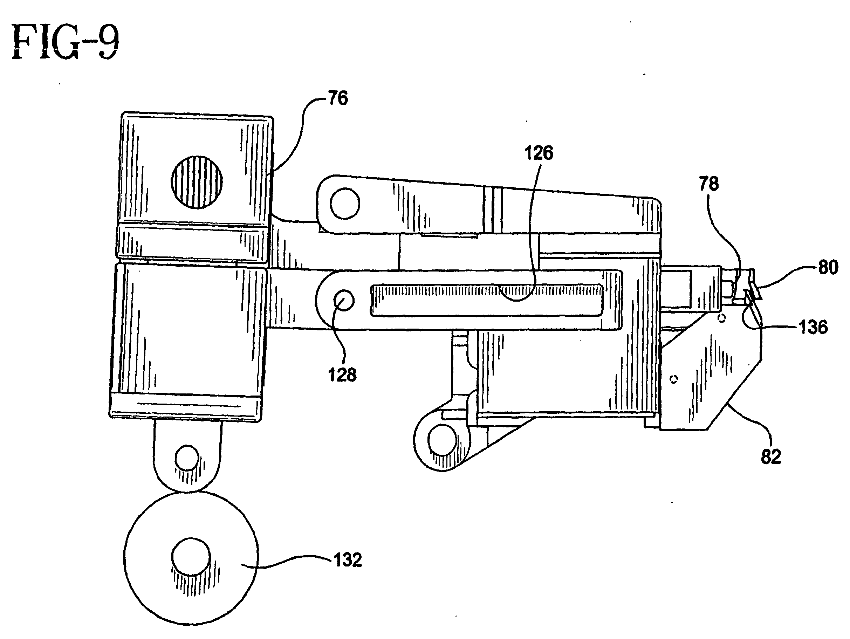

Referring now to Figure 8, ultrasonic horn 76 is shown in its welding position. In this position, tip 78 is aligned with a first vertically extending rearward portion 134 of anvil 80. It is to be noted that a horizontal axis passing through pin 128 is spaced a distance below a horizontal axis passing through the center of ultrasonic horn 76. In this fashion, as tip 78 is rotated about pivot pin 128, the movement of tip 78 with respect to anvil 80 is substantially vertically downward. As shown in Figure 9, ultrasonic horn 76 is pivoted about pivot pin 128 when guide wheel 130 contacts the eccentric portion of cam 132. This pivoting movement translates tip 78 substantially vertically downward such that tip 78 is located adjacent cutting edge 146, with tape 40 positioned therebetween.

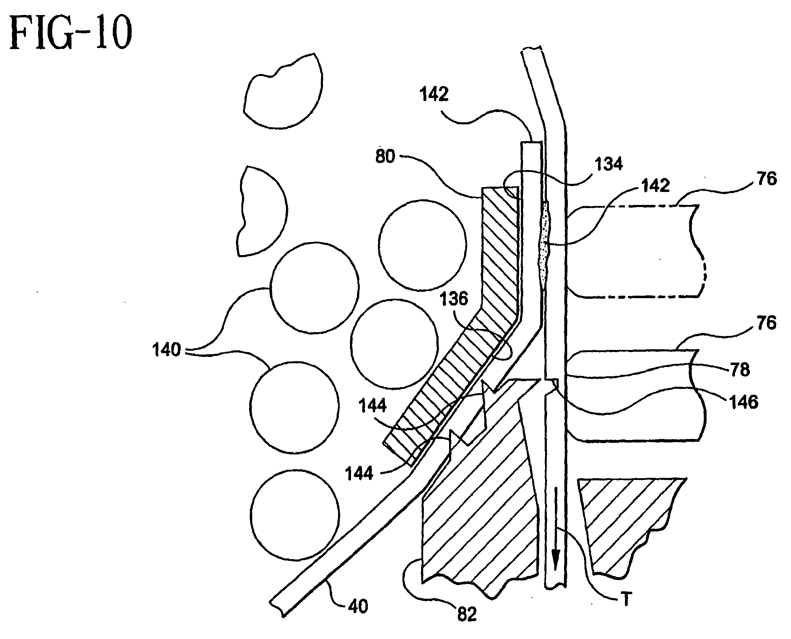

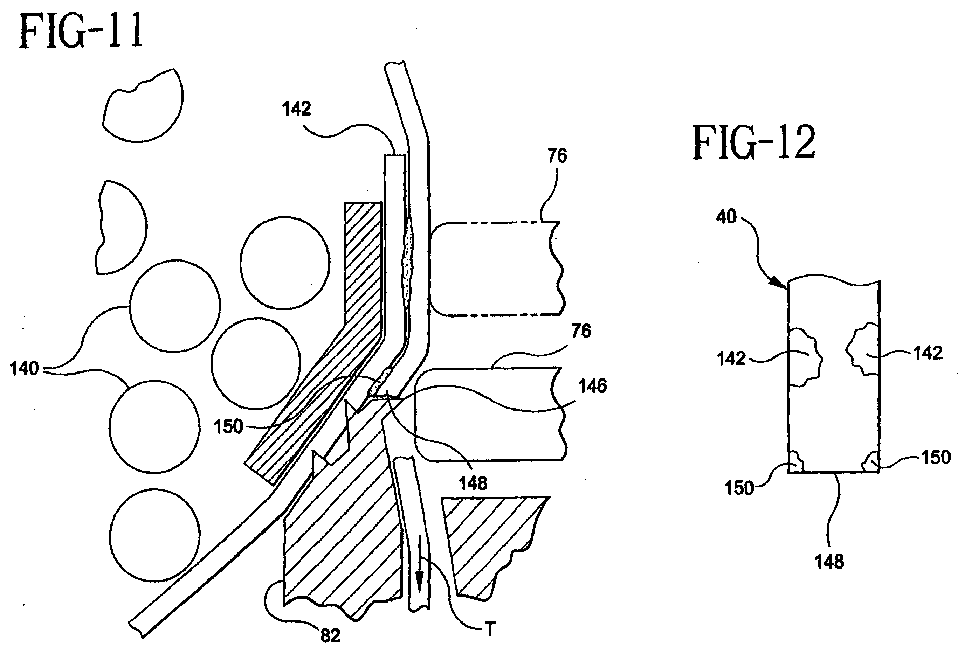

Referring now to Figure 10, tape 40, which is looped about a plurality of wires 40, has a leading free end 142 and a trailing end connected to the stock of the tape contained in the cartridge. Horn 76 is shown in phantom opposite primary weld 142. After the overlapped tapes are secured to one another via weld 142, horn 76 is rotated about pivot pin 128 such that welding tip 78 is displaced vertically downward such that the tip is adjacent to clamping block 82. Clamping block 82 includes a plurality of teeth 144 which bite into and hold tape 40 thereagainst. Clamping block 82 further includes a cutting edge 146. Operation of the ultrasonic horn in this vertically displaced location forces tape 40 against cutting edge 146, thereby cutting the welded tensioned loop from the stock of tape contained in the cartridge. During the welding and cutting operations, tension is maintained in the tape in the direction of arrow T. As shown in Figure 11, the welded tensioned loop has been cut free from the stock of tape. As distal end 148 of tape 140 is cut free from the stock of tape, it is simultaneously tack welded at its outer edges via ultrasonic horn 76.

To ensure that the looped tape remains in a tensioned state during the welding operation, welding horn 76 is configured as to form two primary welds 142 (see Figure 12) without welding entirely across the width of the tape. It will be recognized by those skilled in the art, that welding entirely across the width of the tape allows the tape to lose its tension during such operation. The second tack welding operation also produces two tack welds, i.e., welds 150, which secure distal end 148 of the tape to the underlying tape of the tensioned loop, thereby eliminating the undesirable loose end which otherwise results from the cutting operation.

The operation of the tool will now be described in more detail with reference to Figures 13-16. The tool is preferably programmed to run through a series of steps during one complete cycle. During the first step of the cycle, anvils 84 are positioned in a "home" position, as shown in Figure 13. In this home position, anvils 84 are extended outward from housing 86 the maximum distance whereby surfaces 152 of guide blocks 88 contact surfaces 154 of arms 84. In this positions, anvils 80 are spaced at a maximum distance from one another. The tape is feed through the tool until leading end 142 of the tape rests approximately 1/16 inch above the anvils (see Figures 10-11).

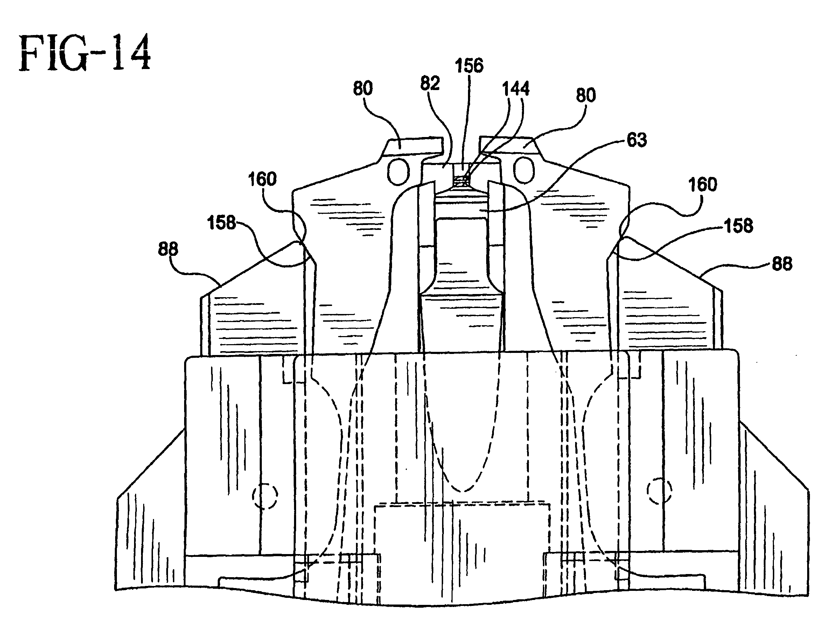

Thereafter, anvils 80 are withdrawn towards clamping block 82 to place the tool in the "guide" position, as shown in Figure 14. In this position, the jaw assembly has closed to encircle the bundle of articles. Once the anvils are in the guide position, tape is fed upward through tape track 63 around the interior of the jaw assembly until the tape extends between lower angled surfaces 136 of anvils 80 and surface 156 of clamping block 82 (see Figure 5a). Surface 156 includes teeth 144 which grip the tape when such tape is pressed thereagainst by anvils 80.

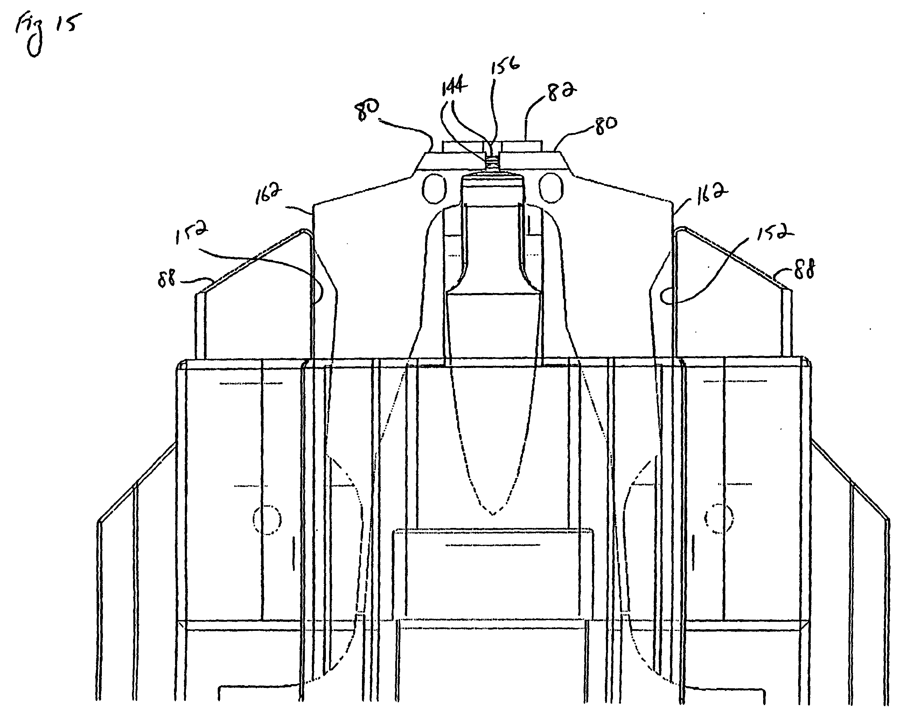

Thereafter, the anvils are further withdrawn to clamp tape 40 between lower surfaces 136 of anvils 80 and surface 156 of clamping block 82 and place the tool in the "clamp" position, as shown in Figure 15.

It can be seen in the guide position that surfaces 158 of arms 84 contact rounded comers 160 of guide blocks 88, thus urging anvils 80 toward one another. In the clamp position, surfaces 162 of arms 80 come into contact with surfaces 152 of guide blocks 88, thus urging anvils 80 even closer together.

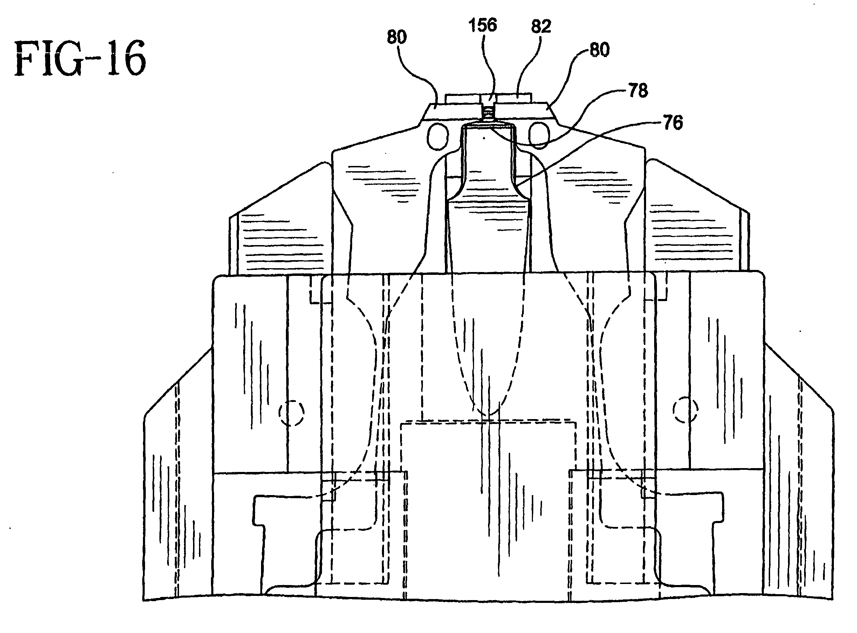

Once the tape has been clamped between lower angled faces 136 of anvils 80 and clamping block 82, the second motor 68 (which operate the drive mechanism assembly) is reversed to apply tension to the loop of tape surrounding a bundle of wires 140. Thereafter, the cooperating anvils and guide block are translated toward tip 78 of ultrasonic horn 76 to place the tool in the "weld" position, as shown in Figure 16. In this weld position, the anvils urge both layers of tape against welding tip 78 of ultrasonic horn 76 (see also Figure 10). The ultrasonic hom is then actuated for a period of time sufficient to weld the overlapped tape together. Because the anvils are angled approximately 12° (see Figure 5a) while the welding tip is flat, pressure is exerted on both sides of the tape. As a result, welding is effected at the locations indicated in Figure 12, with no welding occurring at the center of the tape. Inasmuch as the center of the tape does not melt during the welding process, tension can be maintained on the looped tape during the welding process.

After the primary weld is accomplished, the anvils are translated a short distance away from welding tip 78 to allow welding tip 78 to rotate about pin 128 to its second cutting/tack welding position. Specifically, the anvils translate away from welding tip 78 to allow welding tip 78 to displace downward approximately 0.100 inches. Once the ultrasonic horn is in the cutting/tack welding position, anvils 80 and clamping block 82 are retracted to urge cutting edge 146 into contact with tape 40. The combination of pressure applied by cutting edge 146 and ultrasonic energy (which soften the tape) results in the tensioned loop being severed from the stock of tape. As the tensioned loop is severed from the stock of tape, ultrasonic horn 76 tack welds the distal end 148 to the underlying layer of tape thus eliminating any unsecured loose ends or protruding sharp edges. Following the cutting operation, the tool returns to the home position for the start of a second cycle.

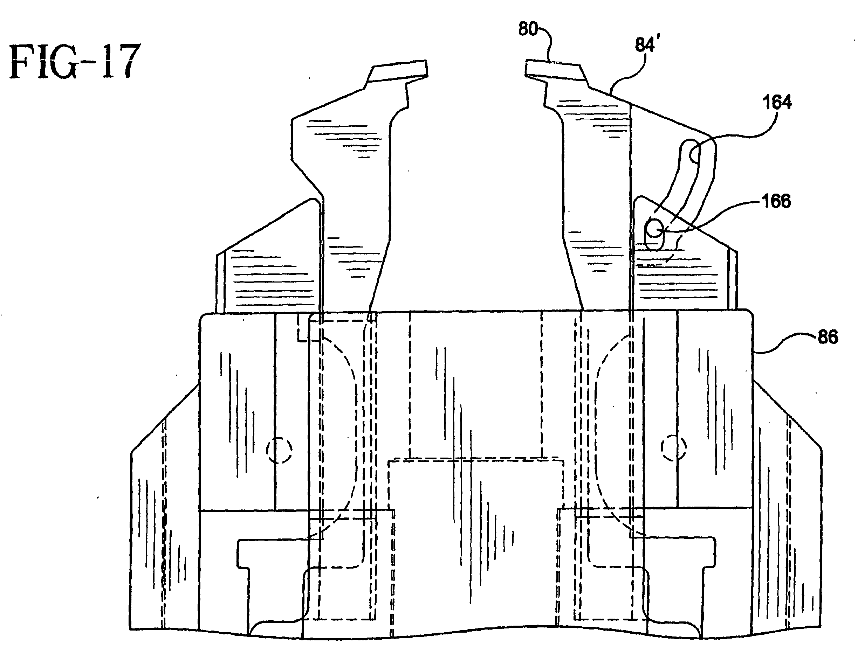

An alternative anvil arm 84' is shown in Figure 17. In this alternative embodiment, anvil arm 84' includes a guide slot 164 which cooperates with a guide pin 166, thus causing anvils 80 to move with respect to one another as anvils 80 are moved with respect to housing 86.

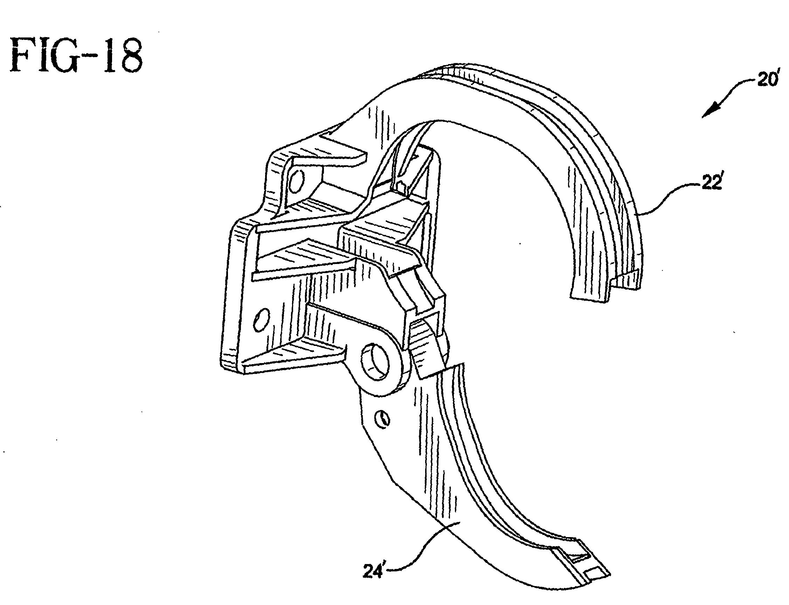

An alternative jaw assembly is shown in Figure 18. Particularly, alternative jaw assembly 20' includes an upper stationary jaw 22' configured to loop about a bundle of elongate articles. Jaw assembly 20' further includes a shorter lower moveable jaw 24'. The configuration of jaw assembly 20' may facilitate the bundling of elongate articles in certain applications.

It will be appreciated that the present invention has been described herein with reference to certain preferred or exemplary embodiments. The preferred or exemplary embodiments described herein may be modified, changed, added to or deviated from within the scope of the followings claims.

## Claims

1. An ultrasonic tying tool (10) for applying a weldable tape about a bundle of elongate articles, comprising:
a housing (12) including a body (14) and a handle (16);
a jaw assembly (20) cooperating with said body (14) and configured to grasp said elongate articles whereby said tape may be looped about said articles;
an ultrasonic horn (76) supported within said body and including a welding tip (78) located proximate said jaw assembly;
at least one anvil (80) located to cooperate with said welding tip and adapted for manipulating a portion of said weldable tape bearing thereagainst; and
**characterised in that** said welding tip (78) is displaceable between a first location wherein said welding tip is positioned to weld said tape thus securing said tape about said elongate articles and a second location wherein said welding tip is displaced a distance from said first location and positioned to effect cutting of said tape and tack welding of the resultant cut end to the underlying tape of said loop.

2. The tool in accordance with Claim 1, wherein said ultrasonic horn (76) is rotatably mounted to said housing (12) whereby said welding tip (78) is rotatable between said first and second locations.

3. The tool in accordance with Claim 2, wherein said ultrasonic horn (76) is rotatable about a point vertically displaced from an axis extending through said welding tip (78) whereby rotation of said welding tip about said point produces substantially vertical movement with respect to said anvil.

4. The.tool in accordance with Claim 1, further comprising a pair of anvil arms (84) each having a flexible hinge portion associated therewith, and wherein each of said anvil arms includes an anvil (80) located on a distal end thereof for cooperating with said welding tip, said anvils including angled regions which cooperate with said welding tip to cause welding of said tape at the outer edges thereof without any associated welding at the center of said tape whereby tension may be maintained in said loop during welding of said tensioned loop.

5. The tool in accordance with Claim 4, further comprising a clamping block (82) located and configured to cooperate with said anvils (80) during the bundling of said elongate articles.

6. The tool in accordance with Claim 5, wherein said clamping block (82) includes a surface having a plurality of teeth (144) thereon, said teeth located to engage said tape bearing thereagainst and facilitate clamping of said tape thereto, said clamping block further including a cutting edge (146) located to contact said tape when said welding tip is in said second location.

7. The tool in accordance with Claim 1, further comprising a cartridge (36) for supplying said tape, said cartridge being configured for removable attachment to said housing (12), said housing including a tape drive mechanism for effecting transfer of said tape from said cartridge (36) to said jaw assembly (20).

8. The tool in accordance with Claim 7, further comprising a drive wheel (28) rotatably mounted to said housing, and wherein said cartridge includes a spring-loaded wheel (46) positioned to cooperate with said drive wheel (28) whereby tape may be advanced from said cartridge.

9. The tool in accordance with Claim 8, wherein said cartridge includes a slack take-up region (56), and wherein said drive wheel may be reversibly driven to tension said loop thus causing said tape to be withdrawn into said slack take-up region of said cartridge.

10. A method of bundling a plurality of elongate articles, comprising:
wrapping a weldable tape having a first free end about said articles to form a loop of tape extending around said articles and beyond said first free end thereby providing an overlap of tape;
providing an ultrasonic welding tip (78) for ultrasonic welding of said overlapped tape at a first location along said overlap;
welding said overlapped tape at said first location;
displacing said welding tip to a second location along said overlap; and
cutting said tape at said second location to provide a second distal end and welding said second distal end to the underlying tape of said loop to secure said distal end thereto.

11. The method according to Claim 10, wherein said ultrasonic welding tip (78) is provided on a rotatably mounted ultrasonic horn (76); and
further comprising the step of rotating said horn to displace said tip between said first and second locations.

12. The method according to Claim 11, wherein said welding step at said first location includes the further step of providing a discontinuous weld across the width of said tape whereby tension may be retained in said loop during welding.

13. The method according to Claim 11, further comprising the steps of providing a cutting edge positioned at said second location; and
wherein said cutting step includes the further steps of applying ultrasonic energy to said tape and pressing said tape against said cutting edge.

14. The method according to Claim 13, wherein said welding step at said second location includes the further step of providing a plurality of tack welds across the width of said tape to secure said second distal end to the underlying tape of said loop.

## Patentansprüche

1. Ein Ultraschallbindewerkzeug (10) zum Legen eines schweißbaren Bandes um ein Bündel aus langen Gegenständen mit:
einem Gehäuse (12) mit einem Hauptteil (14) und einem Handgriff (16),
einer mit dem Hauptteil (14) zusammenwirkenden Backenanordnung (20) mit einer Ausbildung zum Erfassen der langen Gegenstände, wodurch das Band um diese geschlungen werden kann,
einem in dem Hauptteil gehaltenen und in der Nähe der Backenanordnung eine Schweißspitze (78) enthaltenden Ultraschallhorn (76),
mindestens einem zum Zusammenwirken mit der Schweißspitze angeordneten und zum Handhaben eines Abschnitts des an ihm anliegenden schweißbaren Bandes geeigneten Amboß (80) und
**dadurch gekennzeichnet, daß** die Schweißspitze (78) zwischen einer ersten Stelle, an der sie zum Schweißen und damit Sichern des Bandes um die langen Gegenstände angeordnet ist, und einer zweiten Stelle, an der sie sich in einem Abstand von der ersten Stelle befindet und so angeordnet ist, daß sie ein Schneiden des Bandes und ein Heftschweißen des sich ergebenden abgeschnittenen Endes an das darunterliegende Band der Schlinge bewirkt, verschiebbar ist.

2. Das Werkzeug nach Anspruch 1, wobei das Ultraschallhom (76) drehbar am Gehäuse (12) befestigt und damit die Schweißspitze (78) zwischen der ersten und der zweiten Stelle drehbar ist.

3. Das Werkzeug nach Anspruch 2, wobei das Ultraschallhorn (76) um einen gegenüber einer durch die Schweißspitze (78) verlaufenden Achse vertikal versetzten Punkt drehbar ist, so daß eine Drehung der Schweißspitze um diesen Punkt eine im wesentlichen vertikale Bewegung gegenüber dem Amboß bewirkt.

4. Das Werkzeug nach Anspruch 1, weiter mit zwei Amboßarmen (84), jeder mit einem mit ihm verbundenen biegsamen Gelenkabschnitt, wobei jeder Amboßarm einen zum Zusammenwirken mit der Schweißspitze bestimmten, am abgelegenen Ende angeordneten Amboß (80) aufweist, die Ambosse gewinkelte Gebiete aufweisen, die mit der Schweißspitze zum Bewirken eines Anschweißens des Bandes an dessen Außenkanten ohne irgendeine zugehörige Verschweißung im Zentrum des Bandes zusammenarbeiten, wodurch während des Schweißens der gespannten Schlinge die Spannung in dieser aufrechterhalten werden kann.

5. Das Werkzeug nach Anspruch 4, weiter mit einem Klemmblock (82) mit einer Anordnung und Ausgestaltung zum Zusammenarbeiten mit den Ambossen (80) während des Bündelns der langen Gegenstände.

6. Das Werkzeug nach Anspruch 5, wobei der Klemmblock (82) eine Oberfläche mit mehreren darauf befindlichen Zähnen (144) mit solcher Anordnung aufweist, daß diese das an ihnen anliegende Band erfassen und dessen Festklemmen an ihnen erleichtern, und dieser weiter eine Schneidkante (146) mit einer Anordnung zum Kontaktieren des Bandes bei sich an der zweiten Stelle befindender Schweißspitze aufweist.

7. Das Werkzeug nach Anspruch 1, weiter mit einer Patrone (36) zum Zuführen des Bandes mit einer Ausgestaltung mit lösbarer Befestigung am Gehäuse (12), wobei dieses einen Bandantriebsmechanismus zum Bewirken eines Übergangs des Bandes aus der Patrone (36) zur Backenanordnung (20) aufweist.

8. Das Werkzeug nach Anspruch 7, weiter mit einem drehbar am Gehäuse befestigten Antriebsrad (28), wobei die Patrone ein federbelastetes Rad (46) mit einer Anordnung zum Zusammenwirken mit dem Antriebsrad (28) aufweist, wodurch das Band aus der Patrone vorgeschoben werden kann.

9. Das Werkzeug nach Anspruch 8, wobei die Patrone ein Durchhangaufnahmegebiet (56) aufweist und das Antriebsrad zum Spannen der Schlinge umsteuerbar angetrieben werden kann zum Bewirken eines Zurückziehens des Bandes in das Durchhangaufnahmegebiet der Patrone.

10. Ein Verfahren zum Bündeln einer Vielzahl von langen Gegenständen mit:
Wickeln eines schweißbaren Bandes mit einem ersten freien Ende um die Gegenstände zum Ausbilden einer um die Gegenstände und jenseits des ersten freien Endes verlaufenden Bandschlinge zum Erreichen eines Überlappens des Bandes,
Ausbilden einer Ultraschallschweißspitze (28) zum Ultraschallschweißen des überlappten Bandes an einer ersten Stelle entlang der Überlappung,
Schweißen des überlappten Bandes an der ersten Stelle,
Verschieben der Schweißspitze an eine zweite Stelle entlang der Überlappung und
Schneiden des Bandes an der zweiten Stelle zum Ausbilden eines zweiten abgelegenen Endes und Schweißen des zweiten abgelegenen Endes an das darunterliegende Band der Schlinge zum Sichern des abgelegenen Bandes an diesem.

11. Das Verfahren nach Anspruch 10, wobei die Ultraschallschweißspitze (78) an einem drehbar befestigten Ultraschallhorn (76) vorgesehen ist, und
weiter mit der Stufe des Drehens des Horns zum Verschieben der Spitze zwischen der ersten und der zweiten Stelle.

12. Das Verfahren nach Anspruch 11, wobei die Schweißstufe an der ersten Stelle die weitere Stufe des Ausbildens einer diskontinuierlichen Schweißung über der Breite des Bandes umfaßt, wodurch die Spannung während des Schweißens in der Schlinge beibehalten werden kann.

13. Das Verfahren nach Anspruch 11, weiter mit den Stufen des Ausbildens einer an der zweiten Stelle angeordneten Schneidkante,
wobei die Schneidstufe die weiteren Stufen des Anlegens von Ultraschallenergie an das Band und das Andrücken des Bandes an die Schneidkante enthält.

14. Das Verfahren nach Anspruch 13, wobei die Schweißstufe an der zweiten Stelle die weitere Stufe des Ausbildens einer Vielzahl von Heftschweißungen über der Breite des Bandes zum Sichern des zweiten abgelegenen Endes an dem darunterliegenden Band der Schlinge enthält.

## Revendications

1. Outil de fixation par ultrasons (10) pour appliquer un ruban soudable autour d'un groupe d'articles longs, comprenant :
un boîtier (12) comprenant un corps (14) et une poignée (16) ;
un ensemble à mâchoires (20) coopérant avec ledit corps (14) et configuré pour saisir lesdits articles longs de telle sorte que ledit ruban puisse former une boucle autour desdits articles ;
une corne à ultrasons (76) supportée à l'intérieur dudit corps et comprenant une pointe de soudage (78) située à proximité dudit ensemble à mâchoires ;
au moins une enclume (80) située de manière à coopérer avec ladite pointe de soudage et apte à manipuler une partie dudit ruban soudable en étant en appui contre celle-ci ; et
**caractérisé en ce que** ladite pointe de soudage (78) est à même d'être déplacée entre un premier emplacement où ladite pointe de soudage est placée de manière à souder ledit ruban, assujettissant, ainsi, ledit ruban autour desdits articles longs, et un deuxième emplacement où ladite pointe de soudage est déplacée d'une certaine distance à partir dudit premier emplacement et placée de manière à effectuer une découpe dudit ruban et un soudage par points de l'extrémité découpée résultante au ruban sous-jacent de ladite boucle.

2. Outil selon la revendication 1, dans lequel ladite corne à ultrasons (76) est montée à rotation sur ledit boîtier (12) de telle sorte que ladite pointe de soudage (78) puisse être mise en rotation entre lesdits premier et deuxième emplacements.

3. Outil selon la revendication 2, dans lequel ladite corne à ultrasons (76) peut être mise en rotation autour d'un point déplacé verticalement par rapport à un axe s'étendant à travers ladite pointe de soudage (78), de telle sorte que la rotation de ladite pointe de soudage autour dudit point produise un mouvement sensiblement vertical par rapport à ladite enclume.

4. Outil selon la revendication 1, comprenant, en outre, une paire de bras (84) d'enclume présentant chacun une partie d'articulation souple associée à chaque bras, et dans lequel chacun desdits bras d'enclume comprend une enclume (80) située sur son extrémité distale en vue d'une coopération avec ladite pointe de soudage, lesdites enclumes comprenant des régions inclinées qui coopèrent avec ladite pointe de soudage afin de provoquer un soudage dudit ruban à ses bords extérieurs sans soudage associé au centre dudit ruban, de telle sorte qu'une tension puisse être maintenue dans ladite boucle pendant le soudage de ladite boucle tendue.

5. Outil selon la revendication 4, comprenant, en outre, un bloc de serrage (82) situé et configuré de manière à coopérer avec lesdites enclumes (80) durant le groupement desdits articles longs.

6. Outil selon la revendication 5, dans lequel ledit bloc de serrage (82) comprend une surface sur laquelle se trouve une pluralité de dents (144), lesdites dents étant situées de manière à venir en prise avec ledit ruban en appui contre celles-ci et à faciliter le serrage dudit ruban contre celles-ci, ledit bloc de serrage comprenant, en outre, un bord de découpe (146) situé de manière à être en contact avec ledit ruban lorsque ladite pointe de soudage se trouve audit deuxième emplacement.

7. Outil selon la revendication 1, comprenant, en outre, une cartouche (36) pour fournir ledit ruban, ladite cartouche étant configurée en vue d'une fixation amovible audit boîtier (12), ledit boîtier comprenant un mécanisme d'entraînement de ruban pour effectuer le transfert dudit ruban de ladite cartouche (36) audit ensemble à mâchoires (20).

8. Outil selon la revendication 7, comprenant, en outre, une roue d'entraînement (28) montée à rotation sur ledit boîtier, et dans lequel ladite cartouche comprend une roue (46) tarée par ressort placée de manière à coopérer avec ladite roue d'entraînement (28), de telle sorte que le ruban puisse être avancé à partir de ladite cartouche.

9. Outil selon la revendication 8, dans lequel ladite cartouche comprend une région de prise lâche (56), et dans lequel ladite roue d'entraînement peut être entraînée de manière réversible afin de tendre ladite boucle, amenant, ainsi, ledit ruban à être retiré dans ladite région de prise lâche de ladite cartouche.

10. Méthode pour grouper une pluralité d'articles longs, comprenant les étapes consistant à :
envelopper un ruban soudable présentant une première extrémité libre autour desdits articles afin de former une boucle de ruban s'étendant autour desdits articles et au-delà de ladite première extrémité libre, ce qui fournit, ainsi, un chevauchement de ruban ;
fournir une pointe de soudage à ultrasons (78) en vue d'un soudage par ultrasons dudit ruban à chevauchement à un premier emplacement le long dudit chevauchement ;
souder ledit ruban à chevauchement audit premier emplacement ;
déplacer ladite pointe de soudage vers un deuxième emplacement le long dudit chevauchement ; et
découper ledit ruban audit deuxième emplacement afin de fournir une deuxième extrémité distale, et souder ladite deuxième extrémité distale au ruban sous-jacent de ladite boucle afin d'assujettir ladite extrémité distale à celui-ci.

11. Méthode selon la revendication 10, dans laquelle ladite pointe de soudage à ultrasons (78) est fournie sur une corne à ultrasons (76) montée à rotation ; et
comprenant, en outre, l'étape consistant à mettre en rotation ladite corne afin de déplacer ladite pointe entre lesdits premier et deuxième emplacements.

12. Méthode selon la revendication 11, dans laquelle ladite étape de soudage audit premier emplacement comprend une autre étape consistant à fournir une soudure discontinue à travers la largeur dudit ruban, de telle sorte qu'une tension puisse être maintenue dans ladite boucle pendant le soudage.

13. Méthode selon la revendication 11, comprenant, en outre, les étapes consistant à fournir un bord de découpe placé audit deuxième emplacement ; et
dans laquelle ladite étape de découpe comprend des autres étapes consistant à appliquer une énergie ultrasonique audit ruban, et à comprimer ledit ruban contre ledit bord de découpe.

14. Méthode selon la revendication 13, dans laquelle ladite étape de soudage audit deuxième emplacement comprend une autre étape consistant à fournir une pluralité de soudures par points à travers la largeur dudit ruban afin d'assujettir ladite deuxième extrémité distale au ruban sous-jacent de ladite boucle.
